# EUROPÄISCHE PATENTSCHRIFT

(11) **EP 1 652 799 B1**
(45) Veröffentlichungstag und Bekanntmachung des Hinweises auf die Patenterteilung: **06.10.2010**
(21) Anmeldenummer: 04025777.6
(22) Anmeldetag: 29.10.2004
(51) Int. Cl.: B65G 47/14

(54) **Vorrichtung zum Vereinzeln von Stückgütern**
Device for separating piece goods
Dispositif pour individualiser des marchandises

(43) Veröffentlichungstag der Anmeldung: 03.05.2006
(73) Patentinhaber: Rowa Automatisierungssysteme GmbH, 53539 Kelberg (DE)
(72) Erfinder: Wagner, Rudolf M., 53539 Kelberg (DE); Ridder, Folko, 40472 Düsseldorf (DE)
(74) Vertreter: Schmidt, Frank-Michael

(56) Entgegenhaltungen:
- DE-A1- 3 248 777
- US-A- 2 728 443
- US-A- 3 584 735

## Beschreibung

Die Erfindung betrifft eine Vorrichtung zum Vereinzeln von Stückgütern, insbesondere von im wesentlichen quaderförmigen Stückgütern unterschiedlicher Abmessungen.

Vorrichtungen der eingangs genannten Art werden insbesondere bei der automatisierten Einlagerung von Stückgütern in automatische Lagersysteme, beispielsweise automatisierten Regallager für Arzneimittel in Apotheken, benötigt, bei denen eine Mehrzahl unterschiedlicher Stückgüter gleichzeitig angeliefert und die Stückgüter mit Hilfe eines oder mehrerer Bediengeräte in ihre Lagerpositionen eingelagert werden, wobei die Bediengeräte jeweils einzelne Stückgüter ergreifen können. Automatisierte Lager zum Lagern von Arzneimittelpackungen sind beispielsweise in den Patentschriften EP 0 620 528 und DE 195 09 951 C2 beschrieben. Bei den dort beschriebenen Lagersystemen werden die einzulagernden Arzneimittelpackungen zunächst einzeln identifiziert und vermessen und dann von einem Bediengerät ergriffen, welches die Arzneimittelpackungen an einen bestimmten Lagerort bringt.

Bei einigen bekannten automatisierten Regallagern werden Arzneimittelpackungen eingelagert, indem zunächst die Arzneimittelpackung manuell an einem Scanner zur Erfassung eines auf der Packung aufgedruckten Strichcodes vorbeigeführt und dann in einer vorgegebenen Orientierung auf ein Förderband aufgelegt wird. Die so identifizierte und in der vorgegebenen Orientierung auf dem Förderband liegende Arzneimittelpackung wird anschließend vermessen und gelangt dann in den Greifbereich eines Regalbediengeräts, welches die Arzneimittelpackung ergreift (beispielsweise durch einen Sauggreifer oder einen Backengreifer) und an den gewünschten Lagerort ablegt. Bei diesen bekannten Einlagerungsverfahren ist es erforderlich, daß eine Bedienperson jede einzelne Packung (beispielsweise aus einem Anlieferungskarton des Großhandels) entnimmt, am Scanner vorbeiführt und orientiert auflegt.

Ausgehend von diesem Stand der Technik bestand die Aufgabe, den Einlagerungsvorgang zu automatisieren. In DE 101 25 868 A1 wird beispielsweise vorgeschlagen, daß der Großhandel die einzulagernden Packungen bereits in einer vorgegebenen Orientierung und an einer vorgegebenen Position in einen speziell gestalteten Transportbehälter einsortiert, woraufhin dieser Transportbehälter mit einem Datenspeichermedium gekoppelt wird, auf dem die Identifikationen der enthaltenen Arzneimittelpackungen in Zuordnung zu ihren Positionen festgehalten sind. Der Transportbehälter wird nach seiner Anlieferung an einer Apotheke in eine vorgegebene Position in den Greifbereich des Bediengeräts gebracht, woraufhin der Steuereinrichtung des Bediengeräts die die Identifikationen und Positionen betreffenden Daten übermittelt werden. Auf Grundlage dieser Informationen und der vorgegebenen Positionierung des Transportbehälters ist es dann dem Bediengerät möglich, die Packungen definiert aus dem Behälter zu entnehmen und in die Regale einzulagern. Dieses Verfahren hat jedoch den Nachteil, daß es eine Mitwirkung des Großhandels und darüber hinaus definierte Schnittstellen und Definitionen erfordert.

Es gibt darüber hinaus Vereinzelungseinrichtungen, bei denen eine Anzahl von angelieferten Arzneimittelpackungen auf eine Anordnung von vier Förderbändern geschüttet wird, wobei die vier Förderbänder in einem Viereck derart angeordnet sind, daß ein Förderband die Packungen jeweils auf das nächste übergibt und die Packungen umlaufend vom ersten bis zum vierten Förderband und dann wieder auf das erste Förderband befördert werden. Vom Ende eines Förderbands fallen die Packungen über spezielle Umlenkvorrichtungen auf den Anfang des nachfolgenden Förderbands, wobei die Umlenkeinrichtungen so ausgebildet sind, daß eine auf ein erstes Förderband aufgeschüttete Anhäufung von Arzneimittelpackungen nach mehreren Umläufen derart entzerrt wird, daß die einzelnen Packungen mehr oder weniger hintereinander umlaufen. Ein viertes Förderband ist waagerecht angeordnet und weist eine spezielle Oberfläche auf (beispielsweise eine weiße). Über dem vierten Förderband ist eine optische Erfassungseinrichtung angeordnet, die die Position und Orientierung von auf dem Förderband aufliegenden Packungen erfassen kann. Sobald mit einem weiteren Sensor erfaßt worden ist, daß eine ausreichende Entzerrung oder Vereinzelung der Anhäufung von Arzneimittelpackungen stattgefunden hat, wird die optische Erfassungseinrichtung aktiviert, wenn eine einzelne Arzneimittelpackung eine geeignete Position auf dem vierten Förderband eingenommen hat. Dann wird ein Greifer aktiviert, der die Arzneimittelpackung von oben von dem vierten Förderband abhebt. Die Steuereinrichtung des Greifers erhält die die Lage, Orientierung und Abmessungen der zu ergreifenden Arzneimittelpackung beschreibenden Daten und steuert dementsprechend den Greifer. Die ergriffene Arzneimittelpackung wird dann von dem Greifer in einer vorgegebenen Orientierung zu einer vorgegebenen Position gebracht, an welcher die Packung von einem Bediengerät des Lagers übernommen werden kann. Diese bekannte Vereinzelungseinrichtung weist eine Reihe von Nachteilen auf. Insbesondere bei relativ hoher Belastung benötigt sie eine relativ lange Zeit, bevor die erste Arzneimittelpackung ausreichend vereinzelt ist, so daß die Greifeinrichtung zugreifen kann. Darüber hinaus birgt das Greifen einer Packung von oben die Gefahr des Aufziehens einer Lasche der Packung aufgrund der Gewichtslast der in der Packung enthaltenen Arzneimittel.

Eine einem Stufenförderer ähnliche Zuführvorrichtung zum Zuführen von Gemüse (z.B. Gurken) zu Schneidmessern ist aus US 3,584,735 A bekannt. Dort weisen Schieber schräge Vorderkanten auf, um die zugeführten Gemüsestücke relativ zu den Schneidmessern zu positionieren.

In der (bisher unveröffentlichten) Patentanmeldung DE 10 2004 012 133.8 ist eine Vereinzelungsvorrichtung beschrieben, bei der zur Vereinzelung der im wesentlichen quaderförmigen Stückgüter ein Stufenförderer eingesetzt wird. Bei dem Stufenförderer werden die Arzneimittelpackungen aus einem Aufnahmebunker, der über dem Stufenförderer ausgebildet ist, über eine in einer Längsrichtung geneigte Auflagefläche zu einem oberen Rand der Auflagefläche derart transportiert, daß eine Auflagefläche der quaderförmigen Stückgüter in der geneigten Ebene liegt, und eine Begrenzungskante der Auflagefläche parallel zu der Oberkante ausgerichtet ist, so daß ein oder auch mehrere quaderförmige Stückgüter ausschließlich nebeneinander über die Oberkante treten. An die Oberkante schließt sich dann eine Ablagefläche an, wobei eine Sensoranordnung das Auftreffen der Stückgüter sowie deren Position auf der Ablagefläche erfaßt. Diese Vorrichtung hat den Nachteil, daß mehrere Stückgüter gleichzeitig austreten können, so daß ein größerer Aufwand bei der sensorgesteuerten Erfassung der austretenden Stückgüter und deren Positionierung erforderlich ist.

Aufgabe der Erfindung ist es daher, eine Vorrichtung zum Vereinzeln von Stückgütern zu schaffen, bei der mit hoher Wahrscheinlichkeit die Stückgüter nur einzeln an einer vorgegebenen Stelle austreten.

Diese Aufgabe wird erfindungsgemäß durch eine Vorrichtung zum Vereinzeln von Stückgütern mit den Merkmalen des Patentanspruchs 1 gelöst. Die erfindungsgemäße Vorrichtung weist einen Stufenförderer mit wenigstens einer Förderstufe auf. Eine erste Förderstufe umfaßt eine in einer Längsrichtung geneigte erste Auflagefläche und eine in einem vorgegebenen Abstand über der ersten Auflagefläche geführte erste Förderkante. Die erste Förderkante verläuft quer zu der Längsrichtung und ist in der Längsrichtung bewegbar. Oberhalb eines unteren Abschnitts der ersten Auflagefläche ist ein Aufnahmeraum zur Aufnahme einer Mehrzahl zu vereinzelnder Stückgüter vorgesehen. Die erste Förderkante ist an einen oberen Rand der ersten Auflagefläche heranbewegbar und zumindest teilweise über den Rand hinaus bewegbar. Die erste Förderkante verläuft bei ihrer Bewegung in Richtung des Randes, projiziert auf die Ebene der ersten Auflagefläche, schräg zum dem Rand.

Die Auflagefläche kann von einer beliebigen Oberfläche gebildet sein, auf der Stückgüter der zu erwartenden Abmessungen ohne größeren Reibungswiderstand geschoben werden können. Die Oberfläche kann beispielsweise von einer Metall- oder Kunststoffplatte und/oder von einem ausreichend engmaschigen Gitter mit einer glatten Oberfläche gebildet werden. Die Stückgüter werden in der Längsrichtung von unten nach oben bis über den oberen Rand der Auflagefläche hinaus gefördert. Dabei werden sie von der Förderkante und sich gegebenenfalls daran anschließenden Flächen geschoben. Die Förderkante ist beispielsweise die Oberkante einer senkrecht zur Auflagefläche angeordneten Frontfläche einer Platte, die sich über die Auflagefläche in Längsrichtung hinwegbewegt. Die Frontfläche dieser sich verschiebenden Platte braucht aber nicht senkrecht zur ersten Auflagefläche orientiert zu sein, sie kann auch geneigt sein, wobei die Förderkante am weitesten in der Förderrichtung vorsteht. Bei einer alternativen Ausführungsform könnte die Förderkante auch durch ein über die Auflagefläche geführtes schmales Profilblech oder einen gespannten Draht gebildet sein. Wesentlich für die erfindungsgemäße Vorrichtung ist der Verlauf der Förderkante in Bezug auf den Rand der Auflagefläche. Die Orientierung der Förderkante zum Rand der Auflagefläche ist so gewählt, daß nebeneinanderliegende, von der ersten Förderkante geschobene Stückgüter nicht gleichzeitig über den Rand treten, wie das bei einer parallel zum Rand verlaufenden Förderkante der Fall sein könnte. Die Anordnung der Förderkante in Bezug auf den Rand ist vielmehr so gewählt, daß für den Fall, daß von der Förderkante mehrere Stückgüter nebeneinander nach oben geschoben werden, die Stückgüter zu unterschiedlichen Zeitpunkten über den Rand hinaustreten. Dabei brauchen weder die Förderkante noch der Rand geradlinig zu verlaufen, sie können auch gekrümmt sein. Wesentlich zum Erreichen des erfindungsgemäßen Zwecks ist lediglich, daß die Förderkante zumindest in einem Abschnitt schräg, das heißt angewinkelt, zu dem Rand verläuft.

Die Auflagefläche der ersten Förderstufe ist in Längsrichtung geneigt; zusätzlich kann sie in der Richtung quer dazu geneigt sein. Vorzugsweise ist die erste Auflagefläche jedoch ausschließlich in der Längsrichtung geneigt, so daß die aufliegenden Stückgüter sich nicht bevorzugt auf einer Seite der Auflagefläche ansammeln.

Der vorgegebene Abstand, mit der die Förderkante über der ersten Auflagefläche geführt ist, braucht weder entlang der Förderkante noch während der Bewegung der Förderkante auf den Rand zu konstant zu sein. Vorzugsweise ist die Vorrichtung jedoch so ausgebildet, daß der Abstand der ersten Förderkante von der ersten Auflagefläche entlang der Förderkante und während ihrer Bewegung konstant ist. Vorzugsweise verlaufen auch die erste Förderkante und der Rand geradlinig. Dies vereinfacht die Herstellung der Vorrichtung. Zusätzlich können entweder die erste Förderkante oder der Rand der Auflagefläche (aber selbstverständlich nicht beide zugleich) in einem rechten Winkel zur Längsrichtung angeordnet sein. Bei der bevorzugten Ausführungsform der erfindungsgemäßen Vorrichtung verläuft die erste Förderkante derart angewinkelt zu dem Rand, daß sich - während des Bewegens der Förderkante über den Rand hinaus - der Schnittpunkt zwischen der Förderkante und dem Rand quer zur Längsrichtung verschiebt.

Eine bevorzugte Weiterbildung der erfindungsgemäßen Vorrichtung ist dadurch gekennzeichnet, daß eine zweite Förderstufe eine unter der ersten Auflagefläche angeordnete zweite Auflagefläche aufweist, wobei eine zweite Förderkante ebenfalls in einem vorgegebenen Abstand über der zweiten Auflagefläche parallel geführt und in der Längsrichtung von einem unteren Abschnitt der zweiten Auflagefläche bis über einen oberen Rand der zweiten Auflagefläche bewegbar ist und bezüglich der Ebene der Auflagefläche wenigstens abschnittsweise schräg zu dem Rand der zweiten Auflagefläche verläuft. Das Vorsehen einer zweiten Förderstufe verringert die Wahrscheinlichkeit, daß zwei Stückgüter gleichzeitig über den oberen Rand der Vorrichtung austreten, noch weiter. Die erste Auflagefläche und die zweite Auflagefläche brauchen nicht die gleiche Neigung aufzuweisen; die Neigung der zweiten Auflagefläche kann insbesondere geringer sein. Darüber hinaus kann die zweite Auflagefläche auch in einem größeren Abstand unterhalb des Randes der ersten Auflagefläche angeordnet sein, so daß die über den Rand der ersten Auflagefläche austretenden Stückgüter nach unten auf die zweite Auflagefläche fallen.

Bei einer bevorzugten Ausführungsform weisen jedoch die erste und die zweite Auflagefläche die gleiche Neigung auf. Vorzugsweise bildet der Rand der ersten Auflagefläche zugleich die zweite Förderkante. Darüber hinaus sind vorzugsweise die erste Förderkante und die zweite Förderkante zueinander derart orientiert, daß sich der Schnittpunkt zwischen der ersten Förderkante und dem Rand der ersten Auflagefläche einerseits und der Schnittpunkt zwischen dem die zweite Förderkante bildenden Rand der ersten Auflagefläche und dem Rand der zweiten Auflagefläche andererseits dann, wenn die jeweilige Förderkante in Längsrichtung nach oben bewegt wird, in entgegengesetzter Richtung quer zur Längsrichtung verschieben. Dies bedeutet, daß beim Fördern mit der ersten Förderkante über den Rand der ersten Auflagefläche die auf der einen Seite angeordneten Stückgüter sich zuerst über den Rand bewegen, während beim Fördern mit der zweiten Förderkante über den Rand der zweiten Auflagefläche die auf der anderen Seite liegenden Stückgüter zuerst über den Rand befördert werden. Die Kombination der beiden Stufen sorgt selbst dann, wenn sich ausnahmsweise zwei Stückgüter gleichzeitig über den Rand der ersten Auflagefläche bewegen sollten, dafür, daß anschließend die beiden Stückgüter nicht wieder gleichzeitig über den Rand der zweiten Auflagefläche treten können. Bei dieser Ausführungsform sind vorzugsweise sowohl die erste als auch die zweite Förderkante geradlinig ausgebildet und bezüglich der Längsrichtung gegensinnig geneigt. Bei einer Weiterbildung der Erfindung können weitere Förderstufen vorgesehen sein, wobei jeweils der obere Rand der Auflagefläche eine Förderkante der nachfolgenden weiteren Förderstufe bilden kann.

Vorzugsweise sind die Neigung der Auflageflächen in Längsrichtung und der vorgegebene Abstand, mit dem sich die jeweiligen Förderkanten über die Auflageflächen bewegen, in Abhängigkeit von den Abmessungen der größten zu vereinzelnden Stückgüter derart gewählt, daß mit zunehmenden Abmessungen der Stückgüter die Neigung gesenkt und/oder der vorgegebene Abstand erhöht wird. Wenn nämlich bei einer vorgegebenen Neigung der Abstand der Förderkante von der zugehörigen Auflagefläche zu gering gewählt würde, so könnten die größten Stückgüter nicht mehr nach oben gefördert werden, weil diese über die Förderkante nach unten kippten. Dasselbe gilt bei vorgegebenem Abstand, wenn die Neigung zu groß gewählt wird. Selbstverständlich darf der Abstand der Förderkante von der Auflagefläche auch nicht größer als die kleinste zu erwartende Abmessung eines Stückguts gewählt werden, da sonst die Möglichkeit bestünde, daß von der Förderkante zwei übereinanderliegende Stückgüter nach oben befördert würden.

Bei einer Ausführungsform kann die Größe des Winkels zwischen einer jeweiligen Förderkante und dem Rand der darunter angeordneten Auflagefläche in Abhängigkeit von der Streubreite der unterschiedlichen Abmessungen der Stückgüter und in Abhängigkeit von der Neigung der Auflagefläche derart gewählt sein, daß bei größerer Streubreite der Abmessungen ein größerer Winkel und bei größerer Neigung ein geringerer Winkel gewählt wird. Dies ist insbesondere bei einer Ausführungsform von Vorteil, bei der entweder nur eine Förderstufe verwendet wird oder bei dem die Stückgüter über den Rand der ersten Auflagefläche der ersten Förderstufe auf die zweite Auflagefläche nach unten fallen.

Eine bevorzugte Ausführungsform der erfindungsgemäßen Vorrichtung mit zwei Förderstufen ist dadurch gekennzeichnet, daß in der Nähe des Randes der ersten Auflagefläche eine Sensoranordnung vorgesehen ist, die erfaßt, wenn ein Stückgut über den Rand geschoben worden ist und auf die zweite Auflagefläche fällt (d.h. kippt - wobei aber die Orientierung des Stückguts beibehalten wird). Bei der Ausführungsform, bei der der Rand der ersten Auflagefläche gleichzeitig die zweite Förderkante bildet, ist diese Sensoranordnung entlang einer unteren Endposition der in Längsrichtung nach oben bewegbaren zweiten Förderkante angeordnet. Zur Übergabe von Stückgütern von der ersten Förderstufe zur zweiten Förderstufe wird in diesem Fall die erste Auflagefläche, deren oberer Rand die zweite Förderkante bildet, in die untere Position zurückgezogen, so daß der obere Rand bzw. die zweite Förderkante in Längsrichtung knapp unterhalb der Sensoranordnung positioniert ist. Dann wird die erste Förderkante mit den gegebenenfalls aufliegenden Stückgütern langsam von unten nach oben in Richtung der zweiten Förderkante geschoben, bis das erste Stückgut über den Rand der ersten Auflagefläche hinausgeschoben worden ist und auf die zweite Auflagefläche kippt. Dies erfaßt die Sensoranordnung, beispielsweise eine Lichtschranke, die geringfügig über der zweiten Auflagefläche unterhalb der zweiten Förderkante, das heißt dem Rand der ersten Auflagefläche, geführt ist. Die Sensoranordnung liefert ein dieses Ereignis anzeigendes Signal, welches von einer Steuereinrichtung empfangen wird, die die Bewegung der ersten Förderkante anhält, woraufhin die zweite Förderkante nach oben bewegt wird, während die erste Förderkante wieder nach unten zurückgefahren werden kann. In Längsrichtung jenseits des Randes der zweiten Auflagefläche befindet sich vorzugsweise ein weiterer Sensor, der an dieser Stelle den Übertritt eines Stückguts über den Rand der zweiten Auflagefläche erfaßt, wobei in Erwiderung des Erfassens dieses Ereignisses die zweite Förderkante an ihre untere Ausgangsposition zurückbewegt wird. Anschließend kann der Steuerungsablauf von vorn beginnen, indem wieder die erste Förderkante so lange nach oben bewegt wird, bis ein Stückgut über den oberen Rand der ersten Auflagefläche, das heißt die zweite Förderkante, geschoben worden ist und dies von der zugehörigen Sensoranordnung erfaßt ist.

Vorteilhafte und/oder bevorzugte Weiterbildungen der Erfindung sind in den Unteransprüchen gekennzeichnet.

Im folgenden wird die Erfindung anhand eines in der Zeichnung dargestellten bevorzugten Ausführungsbeispiels näher erläutert. In der Zeichnung zeigen:
Figur 1 eine schematische Seitenansicht einer bevorzugten erfindungsgemäßen Vorrichtung zum Vereinzeln von Stückgütern;
Figur 2 eine schematische Draufsicht auf die in Figur 1 gezeigte Vorrichtung;
Figuren 3A bis 3C eine schematische Darstellung dreier Phasen des Bewegungsablaufs beim Fördern und Vereinzeln der Stückgüter mit der erfindungsgemäßen Vorrichtung; und
Figuren 4A bis 4C eine schematische Darstellung dreier Phasen des Bewegungsablaufs, wenn ein Stückgut von einer Förderkante einer ersten Förderstufe über die Förderkante der zweiten Stufe geschoben wird.

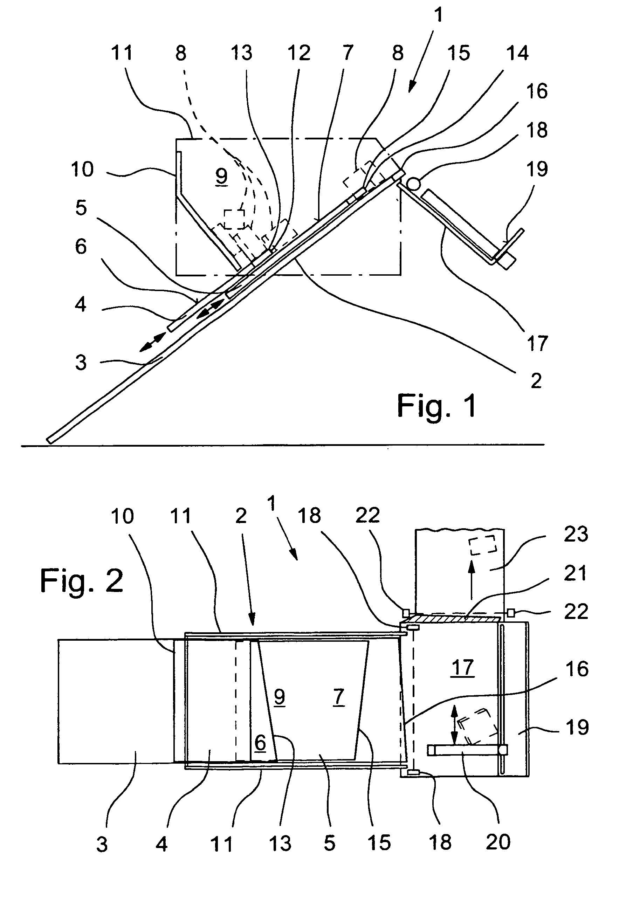

Figur 1 zeigt eine vereinfachte schematische Seitenansicht der wesentlichen Elemente einer bevorzugten Ausführungsform der erfindungsgemäßen Stückgut-Vereinzelungsvorrichtung 1. Figur 2 zeigt eine schematische Draufsicht auf die in Figur 1 gezeigte Vereinzelungsvorrichtung 1. Die Vereinzelungsvorrichtung 1 umfaßt einen zweistufigen Stufenförderer 2. Der Stufenförderer 2 umfaßt eine in einer Längsrichtung geneigte Grundplatte 3 vorgegebener Breite, auf welcher zwei in der Längsrichtung verschiebbare Förderplatten 4 und 5, die etwa die gleiche Breite aufweisen wie die Grundplatte 3, angeordnet sind. Die zweite Förderplatte 5 vorgegebener Dicke ist dicht über der Grundplatte 3 verschiebbar angeordnet. Über der zweiten Förderplatte 5 ist die erste Förderplatte 4, die etwa dieselbe Dicke aufweist, ebenfalls verschiebbar angeordnet. Die Führungseinrichtungen und Antriebe für die Förderplatten 4 und 5 sind in den Figuren 1 und 2 aus Gründen der Übersichtlichkeit nicht dargestellt. Die nach oben weisenden Flächen 6 und 7 der ersten bzw. zweiten Förderplatte 4 und 5 und die Oberseite der Grundplatte 3 bilden jeweils Auflageflächen für die zu vereinzelnden Stückgüter 8, insbesondere Arzneimittelpackungen. Über den Auflageflächen 6 und 7 der Förderplatten 4 und 5 wird ein Aufnahmeraum 9 gebildet, der seitlich durch eine Wand 10 und (in Figur durch eine gestrichelte Linie angedeutete) Seitenwände 11 begrenzt ist. Die Wand 10 ist in geringem Abstand zur Auflagefläche 6 der ersten Förderplatte 4 angeordnet. Die Seitenwände 11 sind beidseitig senkrecht und unmittelbar neben den Förderplatten 4 und 5 und der Grundplatte 3 angeordnet. Die erste Förderplatte 4 weist eine obere Stirnfläche 12 auf, deren Oberkante 13 die erste Förderkante bildet. Auf der Auflagefläche 7 der zweiten Förderplatte 5 aufliegende Stückgüter 8 werden von der Stirnfläche 12 bzw. der Förderkante 13 dann, wenn sich die erste Förderplatte 4 in Längsrichtung nach oben bewegt, auf der Auflagefläche 7 nach oben geschoben. Ebenso werden auf der Grundplatte 3 oberhalb einer Stirnfläche 14 der zweiten Förderplatte 5 aufliegende Stückgüter 8 dann, wenn sich die zweite Förderplatte 5 in Längsrichtung nach oben bewegt, auf der Grundplatte 3 nach oben verschoben. Die Oberkante 15 der Stirnfläche 14 der zweiten Förderplatte 5 bildet eine zweite Förderkante. Wie in Figur 2 zu erkennen ist, sind sowohl die erste Förderkante 13 als auch die zweite Förderkante 15 quer zur Längsrichtung aber nicht rechtwinklig zu dieser angeordnet. Ein wesentliches Element der Erfindung besteht darin, daß die erste Förderkante 13 in einem vorgegebenen Winkel zur zweiten Förderkante 15 angeordnet ist. Darüber hinaus ist die zweite Förderkante 15 in einem zweiten vorgegebenen Winkel zu einem oberen Rand 16 der Auflagefläche der Grundplatte 3 angeordnet.

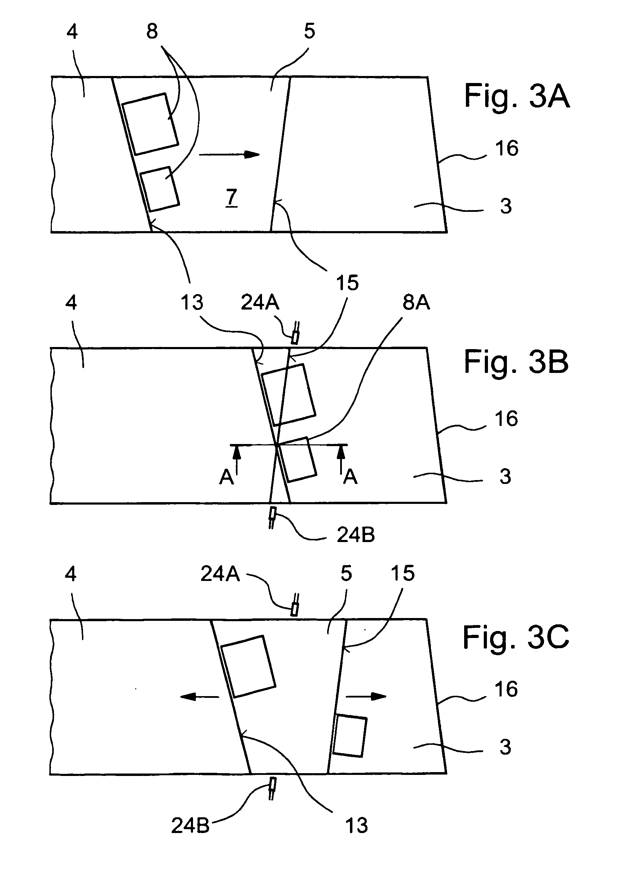

Mit Hilfe der ersten Förderplatte 4 werden die Stückgüter zunächst auf der Auflagefläche 7 der zweiten Förderplatte 5 aus dem Aufnahmeraum 9 nach oben geschoben, bis sie über den die zweite Förderkante 15 bildenden oberen Rand der Auflagefläche 7 treten. Dann liegen die Stückgüter auf der Oberseite der Grundplatte 3 auf und können von der zweiten Förderplatte 5 weiter in Längsrichtung über den oberen Rand 16 der Grundplatte 3 hinausgeschoben werden. Der Ablauf wird detaillierter anhand der Figuren 3A bis 4C weiter unten beschrieben.

Wenn ein einzelnes Stückgut 8 über den oberen Rand 16 des Stufenförderers 2 hinaustritt und auf eine davor angeordnete Auffangplatte 17 fällt, so wird dies durch eine Sensoranordnung 18, beispielsweise eine Lichtschranke, erfaßt. Die Auffangplatte 17 ist in Längsrichtung nach unten geneigt und weist eine untere Anschlagfläche 19 auf, so daß das über den oberen Rand 16 des Stufenförderers 2 austretende Stückgut auf der Auffangplatte 17 bis zu der Anschlagfläche 19 hinabgleitet. Über die Auffangplatte 17 kann quer zur Längsrichtung ein Schieber 20 bewegt werden, der das an der Anschlagfläche 19 anliegende Stückgut quer zur Längsrichtung über einen seitlichen Rand 21 der Auffangplatte 17 hinausschiebt. Der Schieber 20 besteht beispielsweise aus einem sich in Längsrichtung über die Auffangplatte 17 erstreckenden Profilstab. Wenn das Stückgut über den seitlichen Rand 21 der Auffangplatte 17 hinaustritt, so wird dies zunächst durch einen Sensor 22, beispielsweise eine Lichtschrankenanordnung, erfaßt. Anschließend gleitet das vereinzelte Stückgut auf ein Förderband 23, welches das Stückgut zu einer Identifizierungs- und Vermessungsstation transportiert.

Bei einer alternativen Ausführungsform kann sich das Förderband 23 auch direkt an den oberen Rand 16 des Stufenförderers 2 anschließen. Die in den Figuren 1 und 2 dargestellte bevorzugte Anordnung ermöglicht jedoch eine zusätzliche Vereinzelung für den (unwahrscheinlichen) Fall, daß zwei Stückgüter gleichzeitig über den oberen Rand 16 des Stufenförderers austreten. Diese zusätzliche Vereinzelungsmöglichkeit wird durch das Querverschieben mit Hilfe des Schiebers 20 in Kombination mit der Sensoranordnung 22 erreicht. Sobald nämlich ein Stückgut über den Rand 21 der Auflagefläche 17 hinaustritt und auf das Förderband 23 rutscht, wird dies von der Sensoranordnung 22 erfaßt, die daraufhin einer Steuereinrichtung des Antriebs für den Schieber 20 signalisiert, daß die Weiterbewegung des Schiebers abgebrochen werden soll und der Schieber 20 erst dann weiterbewegt werden kann, wenn das auf das Förderband 23 gelangte Stückgut weiter zur Identifikation und Vermessung transportiert worden ist.

Das Zuführen der Stückgüter zu der Vereinzelungsvorrichtung 1, speziell dem Aufnahmeraum 9, kann manuell durch Einkippen erfolgen. Dabei ist die Menge der in den Aufnahmeraum 9 eingebrachten Stückgüter 8 soweit zu begrenzen, daß die eingebrachten Stückgüter 8 nicht auf die Grundplatte 3 oberhalb der zweiten Förderkante 15 gelangen, ohne daß sie dahin von der Förderkante 13 der ersten Förderplatte 4 geschoben worden sind. Wenn beispielsweise bei einer Anwendung der Vereinzelungsvorrichtung für Arzneimittelpackungen in Apotheken die angelieferte Menge das maximale Aufnahmevolumen des Aufnahmeraums 9 übersteigt, so kann auch ein weiteres Aufnahmevolumen oberhalb eines Aufnahmeraum 9 des Stufenförderers 2 beschickenden Förderbands vorgesehen werden.

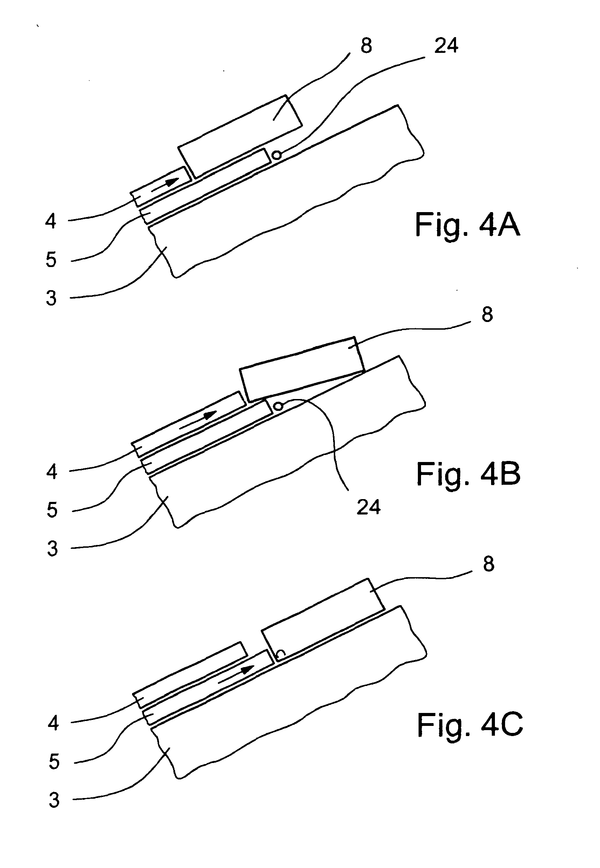

Im folgenden wird anhand der Figuren 3A bis 4C der Bewegungsablauf beim Fördern und Vereinzeln der Stückgüter veranschaulicht. Die Figuren 3A bis 3C zeigen drei Phasen des Bewegungsablaufs beim Fördern der Stückgüter. Figur 3A veranschaulicht schematisch eine Draufsicht auf einen Teil des Stufenförderers 2. Zwei Stückgüter 8 werden in Längsrichtung von der Förderkante 13 der ersten Förderplatte 4 nach oben geschoben. Dabei bewegen sie sich auf den oberen Rand 15 der Auflagefläche 7 der zweiten Förderplatte 5 zu. Die Förderplatte 4 mit der Förderkante 13 wird dabei solange in Längsrichtung bewegt, bis ein erstes Stückgut 8A vollständig über den die zweite Förderkante 15 bildenden Rand der Auflagefläche 7 hinausbewegt worden ist und dann vor die zweite Förderkante 15 auf die Oberseite der Grundplatte 3 fällt. Dieser Moment, bei dem das erste Stückgut 8A vor die zweite Förderkante 15 auf der Oberseite der Grundplatte 3 fällt, ist in Figur 3B dargestellt. Eine Schnittansicht entlang der Linie A-A ist schematisch in Figur 4C des Ablaufs der Figuren 4A bis 4C dargestellt.

Figur 3B zeigt zusätzlich eine Sensoranordnung 24A, 24B, beispielsweise eine Lichtschranke mit einer Lichtquelle 24A und einem Lichtempfänger 24B, die unmittelbar vor der unteren Ausgangsposition der zweiten Förderkante 15 derart angeordnet ist, daß sie erfassen kann, wenn das Stückgut 8A über die Förderkante 15 hinaustritt und auf die Oberfläche der Grundplatte 3 fällt. Sobald die Sensoranordnung 24A, 24B das Ereignis des Auftreffens des ersten Stückguts 8A auf die Grundplatte 3 erfaßt hat, wird ein Signal an eine Steuereinrichtung übermittelt, welche für ein Unterbrechen der Aufwärtsbewegung der Förderplatte 4 sorgt. Die erste Förderplatte 4 verharrt einen Moment und kann danach wieder nach unten zurückbewegt werden, wie es in Figur 3C dargestellt ist. Unmittelbar nach dem Erfassen des Auftreffens des Stückguts 8A auf die Grundplatte 3 veranlaßt die Steuereinrichtung den Antrieb der zweiten Förderplatte 5, die Förderplatte nach oben über die Grundplatte 3 hinweg bis zu deren oberen Rand 16 zu bewegen. Dies ist in Figur 3C dargestellt. Die Förderkante 15 der zweiten Förderplatte 5 wird solange in Richtung der Oberkante 16 und teilweise über diese hinaus nach oben bewegt, bis das Stückgut 8A über die Oberkante 16 hinaustritt und auf die in den Figuren 1 und 2 dargestellte Auflagefläche 17 auftrifft. Dies wird von der Sensoranordnung 18 erfaßt, deren Ausgangssignal die Steuereinrichtung dann veranlaßt, die zweite Förderplatte 5 wieder in die Ausgangsposition zurückzubewegen, woraufhin der Gesamtablauf von vorn beginnen kann.

Figuren 4A bis 4C zeigen etwas detaillierter den Ablauf, bei dem ein erstes Stückgut 8A von der ersten Förderstufe an die zweite Förderstufe übergeben und das Auftreffen des Stückguts auf der zweiten Auflagefläche (Oberfläche der Grundplatte 3) erfaßt wird. Figur 4A zeigt einen Moment, bei dem ein Stückgut 8 von der Stirnfläche 12 der ersten Förderplatte 4 soweit geschoben worden ist, daß es zum Teil über die Oberkante 15 der zweiten Förderplatte 5 hinaustritt. In Figur 4B ist das Stückgut 8 soweit nach oben geschoben worden, daß dessen Schwerpunkt über die Oberkante der zweiten Förderplatte 5 hinausgeschoben worden ist, so daß das Stückgut 8 auf die Oberfläche der Grundplatte 3 kippt. Die Sensoranordnung 24 erfaßt in den Phasen der Figuren 4A und 4B noch nicht das Auftreffen des Stückguts 8 auf die Oberseite der Grundplatte 3 (die der Auflagefläche der zweiten Förderstufe entspricht). Erst in dem in Figur 4C dargestellten Moment, bei dem das Stückgut 8 vollständig über den oberen Rand der zweiten Förderplatte 5 hinausgefördert worden ist und nach unten auf die Oberseite der Grundplatte 3 kippt, bewirkt dieses Kippen auf die Grundplatte eine Erfassung durch die Sensoranordnung 24, beispielsweise eine Unterbrechung der dort angeordneten Lichtschranke. In diesem Moment wird die Aufwärtsbewegung der ersten Förderplatte 4 gestoppt und die Aufwärtsbewegung der zweiten Förderplatte 5 initiiert, wie es durch den in Figur 4C dargestellt Pfeil angezeigt ist.

## Patentansprüche

1. Vorrichtung (1) zum Vereinzeln von im wesentlichen quaderförmigen Stückgütern (8) unterschiedlicher Abmessungen derart, dass die Stückgüter mit hoher Wahrscheinlichkeit einzeln nacheinander an einer vorgegebenen Stelle austreten, wobei die Vorrichtung einen Stufenförderer (2) mit wenigstens einer Förderstufe aufweist,
wobei eine erste Förderstufe eine in einer Längsrichtung geneigte erste Auflagefläche (7) und eine in einem vorgegebenen Abstand über der ersten Auflagefläche (7) geführte erste Förderkante (13) umfaßt,
wobei die erste Förderkante (13) quer zu der Längsrichtung verläuft und in der Längsrichtung bewegbar ist,
wobei oberhalb eines unteren Abschnitts der ersten Auflagefläche (7) ein Aufnahmeraum (9) zur Aufnahme einer Mehrzahl zu vereinzelnder Stückgüter (8) angeordnet ist,
wobei die erste Förderkante (13) an einen oberen Rand (15) der ersten Auflagefläche (7) heranbewegbar und zumindest teilweise über den Rand (15) hinaus bewegbar ist,
wobei die erste Förderkante (13) bei ihrer Bewegung in Richtung des Randes, projiziert auf die Ebene der ersten Auflagefläche (7) schräg zu dem Rand verläuft,
wobei die Orientierung der Förderkante (13) zum Rand (15) der Auflagefläche (7) so gewählt ist, daß für den Fall, daß von der Förderkante mehrere Stückgüter nebeneinander nach oben geschoben werden, die Stückgüter mit hoher Wahrscheinlichkeit zu unterschiedlichen Zeitpunkten über den Rand treten, so daß die Stückgüter nur einzeln nacheinander über den Rand austreten, wobei die erste Förderkante (13) derart angewinkelt zu dem Rand (15) verläuft, daß sich - während des Bewegens der Förderkante über den Rand hinaus - der Schnittpunkt zwischen der Förderkante und dem Rand quer zur Längsrichtung verschiebt.

2. Vorrichtung nach Anspruch 1, **dadurch gekennzeichnet, daß** die erste Auflagefläche (7) ausschließlich in der Längsrichtung geneigt ist.

3. Vorrichtung nach Anspruch 1, **dadurch gekennzeichnet, daß** der Abstand der ersten Förderkante (13) von der ersten Auflagefläche (7) entlang der Förderkante und während ihrer Bewegung konstant ist.

4. Vorrichtung nach Anspruch 1, **dadurch gekennzeichnet, daß** die erste Förderkante (13) geradlinig verläuft.

5. Vorrichtung nach Anspruch 4, **dadurch gekennzeichnet, daß** der Rand (15) geradlinig verläuft.

6. Vorrichtung nach Anspruch 1, **dadurch gekennzeichnet, daß** die erste Förderkante (13) oder der Rand (15) im rechten Winkel zur Längsrichtung angeordnet sind.

7. Vorrichtung nach einem der Ansprüche 1 bis 6, **dadurch gekennzeichnet, daß** eine zweite Förderstufe eine unter der ersten Auflagefläche (7) angeordnete zweite Auflagefläche aufweist, wobei eine zweite Förderkante (15) ebenfalls in einem vorgegebenen Abstand über der zweiten Auflagefläche parallel geführt und in der Längsrichtung von einem unteren Abschnitt der zweiten Auflagefläche bis über einen oberen Rand (16) der zweiten Auflagefläche bewegbar ist und bezüglich der Ebene der Auflagefläche wenigstens abschnittsweise schräg zu dem Rand der zweiten Auflagefläche verläuft.

8. Vorrichtung nach Anspruch 7, **dadurch gekennzeichnet, daß** die erste und die zweite Auflagefläche die gleiche Neigung aufweisen.

9. Vorrichtung nach Anspruch 8, **dadurch gekennzeichnet, daß** der Rand (15) der ersten Auflagefläche (7) die zweite Förderkante bildet.

10. Vorrichtung nach Anspruch 8 oder 9, **dadurch gekennzeichnet, daß** die erste Förderkante (13) und die zweite Förderkante (15) zueinander derart orientiert sind, daß sich der Schnittpunkt zwischen der ersten Förderkante (13) und dem Rand der ersten Auflagefläche (15) und der Schnittpunkt zwischen dem die zweite Förderkante bildenden Rand (15) der ersten Auflagefläche und dem Rand (16) der zweiten Auflagefläche dann, wenn die jeweilige Förderkante in Längsrichtung nach oben bewegt wird, in entgegengesetzter Richtung verschieben.

11. Vorrichtung nach Anspruch 10, **dadurch gekennzeichnet, daß** die erste und die zweite Förderkante geradlinig und bezüglich der Längsrichtung gegensinnig geneigt sind.

12. Vorrichtung nach einem der Ansprüche 1 bis 11, **dadurch gekennzeichnet, daß** weitere Förderstufen vorgesehen sind, wobei jeweils der obere Rand der Auflagefläche eine Förderkante der nachfolgenden weiteren Förderstufe bildet.

13. Vorrichtung nach einem der Ansprüche 1 bis 12, **dadurch gekennzeichnet, daß** die Neigung der Auflageflächen in Längsrichtung und der vorgegebene Abstand, mit dem sich die jeweiligen Förderkanten über die Auflageflächen bewegen, in Abhängigkeit von den Abmessungen der größten zu vereinzelnden Stückgüter derart gewählt sind, daß mit zunehmenden Abmessungen der Stückgüter die Neigung gesenkt und/oder der vorgegebene Abstand erhöht wird.

14. Vorrichtung nach einem der Ansprüche 1 bis 13, **dadurch gekennzeichnet, daß** die Größe des Winkels zwischen einer jeweiligen Förderkante und dem Rand der darunter angeordneten Auflagefläche in Abhängigkeit von der Streubreite der unterschiedlichen Abmessungen der Stückgüter und in Abhängigkeit von der Neigung der Auflagefläche derart gewählt ist, daß bei größerer Streubreite der Abmessungen ein größerer Winkel und bei größerer Neigung ein geringerer Winkel gewählt wird.

15. Vorrichtung nach einem der Ansprüche 8 bis 11, **dadurch gekennzeichnet, daß** in der Nähe des Randes (15) der ersten Auflagefläche (7) eine Sensoranordnung (24A,B) vorgesehen ist, die erfaßt, wenn ein Stückgut (8) über den Rand (15) geschoben worden ist und auf der zweiten Auflagefläche aufliegt.

## Claims

1. Apparatus (1) for separating substantially block-shaped piece goods (8) of different dimensions such that the piece goods emerge individually one after the other at a predetermined position with a high probability, wherein the apparatus includes a stage conveyor (2) with at least one conveyor stage, wherein a first conveyor stage includes a first engagement surface (7) inclined in a longitudinal direction and a first conveyor edge (13) guided at a predetermined distance above the firsts engagement surface (7), wherein the first conveyor edge (13) extends transversely to the longitudinal direction and is moveable in the longitudinal direction, wherein arranged above a lower section of the first engagement surface (7) there is a receiving space (9) for receiving a plurality of piece goods (8) to be separated, wherein the first conveyor edge (13) may be advanced towards an upper margin (15) of the first engagement surface (7) and is moveable at least partially beyond the margin (15), wherein, when it moves in the direction of the margin, the first conveyor edge (13) projected on to the plane of the first engagement surface (7), extends transversely to the margin, wherein the orientation of the conveyor edge (13) to the margin (15) of the engagement surface (7) is so selected that in the event that a plurality of piece goods are pushed upwardly by the conveyor edge next to one another, the piece goods move with a high probability over the margin at different times so that the piece goods emerge only separately one after the other over the edge, wherein the first conveyor edge (13) extends at an inclination to the margin (15) such that - during the movement of the conveyor edge beyond the margin - the intersection between the conveyor edge and the margin moves transversely to the longitudinal direction.

2. Apparatus as claimed in claim 1, **characterised in that** the first engagement surface (7) is inclined exclusively in the longitudinal direction.

3. Apparatus as claimed in claim 1, **characterised in that** the distance of the first conveyor edge (13) from the first engagement surface (7) is constant along the conveyor edge and during its movement.

4. Apparatus as claimed in claim 1, **characterised in that** the conveyor edge (13) extends in a straight line.

5. Apparatus as claimed in claim 4, **characterised in that** the margin (15) extends in a straight line.

6. Apparatus as claimed in claim 1, **characterised in that** the first conveyor edge (13) or the margin (15) are disposed at a right angle to the longitudinal direction.

7. Apparatus as claimed in one of claims 1 to 6, **characterised in that** the second conveyor stage includes a second engagement surface disposed beneath the first engagement surface (7) wherein a second conveyor edge (15) is moveable, also guided parallel and at a predetermined distance above the second engagement surface and in the longitudinal direction, by a lower section of the second engagement surface to beyond an upper margin (16) of the second engagement surface and extends, at least in sections, obliquely to the margin of the second engagement surface with respect to the plane of the engagement surface.

8. Apparatus as claimed in claim 7, **characterised in that** the first and second engagement surfaces have the same angle of inclination.

9. Apparatus as claimed in claim 8, **characterised in that** the margin (15) of the first engagement surface (7) constitutes the second conveyor edge.

10. Apparatus as claimed in claim 8 or 9, **characterised in that** the first conveyor edge (13) and the second conveyor edge (15) are orientated with respect to one another such that the point of intersection between the first conveyor edge (13) and the margin of the first engagement surface (15) and the point of intersection between the margin (15) constituting the second conveyor edge, of the first engagement surface and the margin (16) of the second engagement surface move in opposite directions when the respective conveyor edge is moved upwardly in the longitudinal direction.

11. Apparatus as claimed in claim 10, **characterised in that** the first and second conveyor edges are straight lines and are inclined in the opposite sense with respect to the longitudinal direction.

12. Apparatus as claimed in one of claims 1 to 11, **characterised in that** further conveyor stages are provided, the upper edge of each engagement surface constituting a conveyor edge of the subsequent further conveyor stage.

13. Apparatus as claimed in one of claims 1 to 12, **characterised in that** the angle of inclination of the engagement surfaces in the longitudinal direction and the predetermined distance, with which the respective conveyor edges move above the engagement surfaces, are selected in dependence on the dimensions of the largest piece goods to be separated such that with increasing dimensions of the piece goods the angle of inclination is reduced and/or the predetermined distance is increased.

14. Apparatus as claimed in one of claims 1 to 13, **characterised in that** the magnitude of the angle between each conveyor edge and the margin of the engagement surface disposed beneath it is selected in dependence on the width of scatter of the different dimensions of the piece goods and in dependence on the angle of inclination of the engagement surface such that with a larger width of scatter of the dimensions a larger angle is selected and with a larger inclination a smaller angle is selected.

15. Apparatus as claimed in one of claims 8 to 11, **characterised in that** provided in the vicinity of the margin (15) of the first engagement surface (7) there is a sensor arrangement (24A, B), which detects when a piece good (8) has been pushed over the margin (15) and rests on the second engagement surface.

## Revendications

1. Dispositif (1) pour individualiser des articles (8) sensiblement parallélépipédiques de dimensions différentes de sorte que les articles sortent avec une grande probabilité individuellement, l'un après l'autre, en un point prédéfini, dans lequel le dispositif présente un convoyeur à paliers (2) ayant au moins un palier de convoyage,
dans lequel un premier palier de convoyage comprend une première surface d'appui (7) inclinée dans la direction longitudinale et une première arête de convoyage (13) guidée à une distance prédéfinie sur la première surface d'appui (7),
dans lequel la première arête de convoyage (13) s'étend transversalement à la direction longitudinale et est déplaçable dans la direction longitudinale,
dans lequel un espace de réception (9) destiné à recevoir une pluralité d'articles à individualiser (8) est agencé au-dessus d'une section inférieure de la première surface d'appui (7),
dans lequel la première arête de convoyage (13) peut s'avancer sur un bord supérieur (15) de la première surface d'appui (7) et se déplacer du moins en partie sur le bord (15),
dans lequel la première arête de convoyage (13), lorsqu'elle se déplace en direction du bord, s'étend projetée sur le plan de la première surface d'appui (7) en oblique par rapport au bord,
dans lequel l'orientation de l'arête de convoyage (13) par rapport au bord (15) de la surface d'appui (7) est choisie de sorte que, dans le cas où plusieurs articles sont poussés l'un à côté de l'autre vers le haut par l'arête de convoyage, les articles sortent avec une grande probabilité du bord à des moments différents afin que les articles ne sortent du bord qu'individuellement l'un après l'autre, dans lequel la première arête de convoyage (13) s'étend en faisant un angle par rapport au bord (15) de sorte que, pendant le déplacement de l'arête de convoyage sur le bord, le point d'intersection entre l'arête de convoyage et le bord se déplace transversalement à la direction longitudinale.

2. Dispositif selon la revendication 1, **caractérisé en ce que** la première surface d'appui (7) est inclinée exclusivement dans la direction longitudinale.

3. Dispositif selon la revendication 1, **caractérisé en ce que** la distance de la première arête de convoyage (13) depuis la surface d'appui (7) le long de l'arête de convoyage et pendant son déplacement est constante.

4. Dispositif selon la revendication 1, **caractérisé en ce que** la première arête de convoyage (13) s'étend de manière rectiligne.

5. Dispositif selon la revendication 4, **caractérisé en ce que** le bord (15) s'étend de manière rectiligne.

6. Dispositif selon la revendication 1, **caractérisé en ce que** la première arête de convoyage (13) ou le bord (15) est agencé à angle droit par rapport à la direction longitudinale.

7. Dispositif selon l'une quelconque des revendications 1 à 6, **caractérisé en ce qu'**un deuxième palier de convoyage présente une deuxième surface d'appui agencée sous la première surface d'appui (7), dans lequel une deuxième arête de convoyage (15) est également guidée parallèlement à une distance prédéfinie sur la deuxième surface d'appui et est déplaçable dans la direction longitudinale depuis une section inférieure de la deuxième surface d'appui jusqu'à un bord supérieur (16) de la deuxième surface d'appui et s'étend vis-à-vis du plan de la surface d'appui au moins par segments en oblique par rapport au bord de la deuxième surface d'appui.

8. Dispositif selon la revendication 7, **caractérisé en ce que** la première et la deuxième surface d'appui présentent la même inclinaison.

9. Dispositif selon la revendication 8, **caractérisé en ce que** le bord (15) de la première surface d'appui (7) forme la deuxième arête de convoyage.

10. Dispositif selon la revendication 8 ou 9, **caractérisé en ce que** la première arête de convoyage (13) et la deuxième arête de convoyage (15) sont orientées l'une par rapport à l'autre de sorte que le point d'intersection entre la première arête de convoyage (13) et le bord de la première surface d'appui (15) et le point d'intersection entre le bord (15) formant la deuxième arête de convoyage de la première surface d'appui et le bord (16) de la deuxième surface d'appui, lorsque l'arête de convoyage respective est déplacée vers le haut dans la direction longitudinale, se déplacent en sens opposé.

11. Dispositif selon la revendication 10, **caractérisé en ce que** la première et la deuxième arête de convoyage sont rectilignes et inclinées en sens inverse par rapport à la direction longitudinale.

12. Dispositif selon l'une quelconque des revendications 1 à 11, **caractérisé en ce que** l' on prévoit d' autres paliers de convoyage, le bord supérieur de la surface d'appui formant respectivement une arête de convoyage de l'autre palier de convoyage suivant.

13. Dispositif selon l'une quelconque des revendications 1 à 12, **caractérisé en ce que** l'on choisit l'inclinaison des surfaces d'appui dans la direction longitudinale et la distance prédéfinie, avec laquelle les arêtes de convoyage respectives se déplacent sur les surfaces d'appui, en fonction des dimensions des articles de plus grande taille à individualiser de manière à diminuer l'inclinaison et/ou à augmenter la distance prédéfinie à mesure que les dimensions des articles augmentent.

14. Dispositif selon l'une quelconque des revendications 1 à 13, **caractérisé en ce que** l'on choisit la grandeur de l'angle entre une arête de convoyage respective et le bord de la surface d'appui agencée en dessous en fonction de la dispersion des différentes dimensions des articles et en fonction de l'inclinaison de la surface d'appui de manière à choisir un plus grand angle dans le cas d'une plus grande dispersion des dimensions et un angle plus petit dans le cas d'une plus grande inclinaison.

15. Dispositif selon l'une quelconque des revendications 8 à 11, **caractérisé en ce qu'**à proximité du bord (15) de la première surface d'appui (7), on prévoit un dispositif capteur (24A,B) qui détecte si un article (8) a été poussé au-delà du bord (15) et repose sur la deuxième surface d'appui.
